# FASCICULE DE BREVET EUROPEEN

(11) **EP 3 710 301 B1**
(45) Date de publication et mention de la délivrance du brevet: **01.12.2021**
(21) Numéro de dépôt: 18800722.3
(22) Date de dépôt: 23.10.2018
(51) Int. Cl.: B60K 15/01, F16L 3/01, F16L 3/13

(54) **TUBULURE DE REMPLISSAGE DE CARBURANT MUNIE D'UN DISPOSITIF DE FIXATION**
MIT BEFESTIGUNGSVORRICHTUNG AUSGESTATTETER KRAFTSTOFFEINFÜLLSTUTZEN
FUEL FILLER NECK PROVIDED WITH AN ATTACHMENT DEVICE

(30) Priorité: 14.11.2017 FR 1760677
(43) Date de publication de la demande: 23.09.2020
(73) Titulaire: PSA Automobiles SA, 78300 Poissy (FR)
(72) Inventeur: FOURNAISE, Eddy, 25750 Arcey (FR); HOUALET, Tristan, 25200 Montbéliard (FR); BOURIOT, Frank, 25550 Allondans (FR); MOITRON, Jean François, 78370 Plaisir (FR); FAVRET, Regis, 25400 Audincourt (FR)
(86) Numéro de dépôt international: PCT/FR2018/052634
(87) Numéro de publication internationale: WO 2019/097132

(56) Documents cités:
- CN-A- 101 391 576
- CN-U- 203 864 434
- DE-A1- 19 547 070
- US-A1- 2005 253 026

## Description

L'invention concerne de manière générale le domaine automobile. Plus particulièrement, l'invention se rapporte à une tubulure de remplissage de carburant munie d'un dispositif de fixation pour la fixation de la tubulure dans un passage de roue d'un véhicule.

Dans un véhicule automobile, la tubulure de remplissage de carburant est habituellement implantée dans le passage de roue du véhicule. Cette tubulure relie une trappe de carburant à un réservoir de carburant situé sous le plancher du véhicule. Le cheminement de la tubulure dans le passage de roue est contraint par les réglementations en vigueur, de manière à réduire les conséquences en cas de choc. Il en découle la nécessité de fixer la tubulure sur le passage de roue, notamment lorsque cette tubulure comporte un manchon souple de raccordement au réservoir qui s'oppose à son auto-maintien en position notamment dans la partie basse du passage de roue.

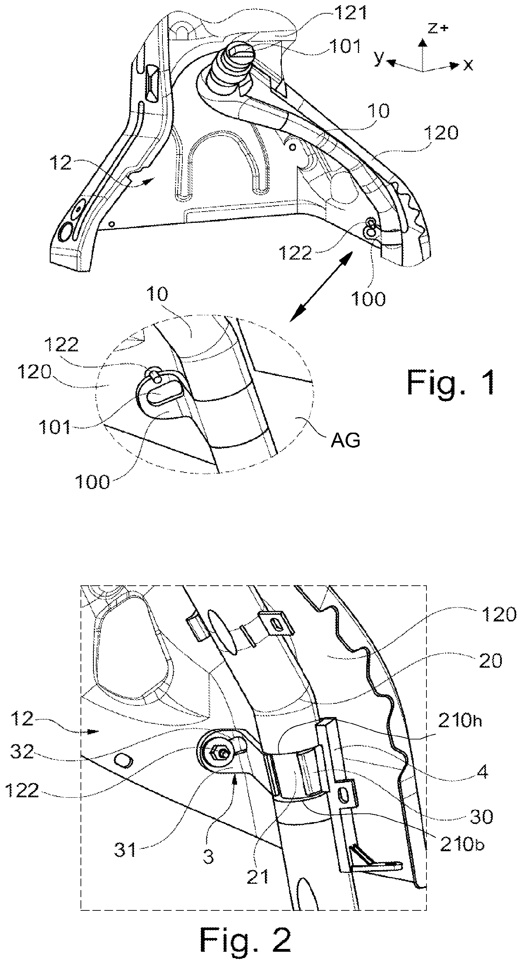

Dans la configuration connue de la Fig.1, la tubulure de remplissage de carburant 10 est assemblée, dans sa partie haute, à une trappe de carburant 11 et comporte une patte de fixation en équerre 100 qui située dans sa partie basse. La patte de fixation 100 est fixée rigidement sur la tubulure, typiquement par soudure. La tubulure de remplissage de carburant 10 est située ici du côté avant d'un passage de roue 12, en forme de U inversé, et longe une paroi latérale 120 du passage de roue 12. La trappe de carburant 11 est prévue pour être fixée mécaniquement sur une paroi haute 121 du passage de roue 12. En partie basse du passage de roue 12, la tubulure 10 comporte un coude (non représenté) amenant celle-ci sous le plancher arrière du véhicule, en direction du réservoir de carburant.

Le réservoir de carburant et sa tubulure de remplissage de carburant sont montés en automatique, sous caisse, lors de l'opération appelée « coiffage en Z+ » par l'homme du métier. L'opération de coiffage fait appel à un châssis-outillage de montage automatique dans lequel sont installés, à des positions définies spatialement, les organes à monter sous caisse et notamment la tubulure de remplissage de carburant. Le châssis-outillage est soulevé en Z+ par un élévateur et les différents organes sont ainsi amenés jusqu'à leurs positions de montage sur la caisse qui est portée par une balancelle dans la chaîne de fabrication. La Fig.1 montre la position de la tubulure de remplissage de carburant 10 dans le passage de roue 12 en fin d'opération de coiffage. Comme montré dans l'agrandissement AG de la Fig.1, dans cette position, la patte de fixation 100 bute contre un goujon de fixation 122. Le goujon de fixation 122 est soudé sur la paroi 120 du passage de roue 12. La patte de fixation 100 comporte un orifice 101 prévu pour un engagement de la patte 100 avec le goujon de fixation 122, de manière à fixer ensuite la patte contre la paroi 120 au moyen d'un écrou visé sur le goujon 122. La venue en butée de la patte de fixation 100 contre le goujon 122 empêche l'insertion de celui-ci dans l'orifice 101 de la patte 100 et le montage automatique de la tubulure 10 dans le passage de roue 12. Le document DE 195 47 070 A1 divulgue une tubulure de remplissage de carburant comprenant un dispositif de fixation d'un type connu.

L'invention vise à apporter une solution au problème exposé ci-dessus, en fournissant une tubulure de remplissage de carburant munie d'un dispositif de fixation qui est conçu pour autoriser un montage automatique complet du réservoir de carburant et de sa tubulure de remplissage dans le passage de roue d'un véhicule.

Selon un premier aspect, l'invention concerne une tubulure de remplissage de carburant comprenant un dispositif de fixation agencé de façon à autoriser une fixation de la tubulure dans un passage de roue d'un véhicule, suivant les caractéristiques de la revendication 1. Conformément à l'invention, le dispositif de fixation comprend une patte de fixation pivotante, la patte de fixation pivotante comprenant une bague formant charnière qui est montée en rotation avec frottement sur une portion formant support de rotation qui est comprise dans la tubulure.

On notera que le frottement du montage en rotation de la bague formant charnière sur la portion formant support de rotation permet un auto-maintien de la patte de fixation pivotante dans une position escamotée lors de l'opération de coiffage. La patte de fixation pivotante est mise dans cette position escamotée préalablement à l'opération de coiffage, de façon à éviter une interférence avec l'environnement du passage de roue lors du coiffage.

Selon une caractéristique particulière, la bague formant charnière est une bague ouverte clipsée sur la portion formant support de rotation.

Selon une caractéristique essentielle de l'invention, le dispositif de fixation comprend également une pièce de verrouillage qui est fixée sur la tubulure et comprend des moyens agencés de façon à maintenir en place la bague formant charnière sur la portion formant support de rotation, sans empêcher un pivotement de la bague formant charnière sur la portion formant support de rotation.

Selon une caractéristique particulière, la bague formant charnière comprend un rebord d'arrêt de rotation et la pièce de verrouillage comprend une portion formant butée, le rebord d'arrêt de rotation et la portion formant butée étant agencés de façon à assurer une immobilisation angulaire de la patte de fixation pivotante dans une position escamotée de celle-ci.

Selon encore une autre caractéristique particulière, la pièce de verrouillage est soudée sur la tubulure.

Selon encore une autre caractéristique particulière, la portion formant support de rotation a un diamètre extérieur inférieur à celui de la tubulure et est bornée en hauteur par deux épaulements circulaires en regard interdisant une translation de la bague formant charnière.

Selon encore une autre caractéristique particulière, le dispositif de fixation est en plastique.

L'invention concerne aussi un passage de roue d'une caisse de véhicule équipé d'une tubulure de remplissage de carburant telle que décrite brièvement ci-dessus et un véhicule comprenant ce passage de roue.

D'autres avantages et caractéristiques de la présente invention apparaîtront plus clairement à la lecture de la description détaillée ci-dessous de plusieurs formes de réalisation particulières de l'invention, en référence aux dessins annexés, dans lesquels :
la Fig.1 est une vue partielle en perspective d'un passage de roue arrière de véhicule équipé d'une tubulure de remplissage de carburant connue ;
la Fig.2 est une vue partielle en perspective d'un passage de roue arrière de véhicule équipé d'une tubulure de remplissage de carburant selon l'invention ;
la Fig.3 est une vue en perspective d'une patte de fixation pivotante comprise dans le dispositif de fixation de la tubulure de remplissage de carburant de la Fig.2 ;
la Fig.4 est une vue en perspective d'une pièce de verrouillage comprise dans le dispositif de fixation de la tubulure de remplissage de carburant de la Fig.2 ; et
les Figs.5A et 5B sont des vues partielles en perspective montrant respectivement des positions escamotée et rabattue de la patte de fixation pivotante.

En référence aux Figs.2 à 4 et 5A, 5B, il est maintenant décrit une forme de réalisation particulière 20 d'une tubulure de remplissage de carburant selon l'invention et sa fixation dans un passage de roue 12.

La tubulure de remplissage de carburant 20 est typiquement une pièce en plastique et comprend une patte de fixation pivotante 3. La patte de fixation pivotante 3 est montée dans une partie rigide ou semi-rigide de la tubulure 20. Plus précisément, dans cette forme de réalisation particulière, comme montré à la Fig.2, la patte de fixation 3 est montée pivotante sur une portion formant support de rotation 21 de la tubulure 20. La portion support de rotation 21 est une portion cylindrique ayant ici un diamètre extérieur inférieur à celui de la tubulure. La portion support de rotation 21 est bornée en hauteur par deux épaulements circulaires 210h, 210b, en regard, empêchant ainsi une translation de la patte de fixation pivotante 3.

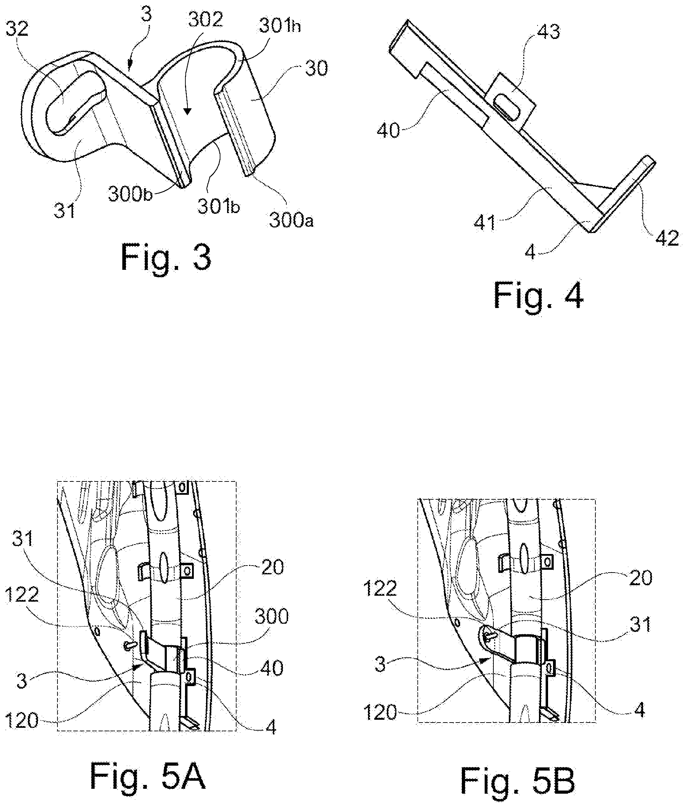

Comme montré à la Fig.3, la patte de fixation pivotante 3 comprend essentiellement une bague 30 et une équerre de fixation 31. La patte de fixation pivotante 3 est typiquement une pièce monobloc en plastique rigide ou semi-rigide obtenue par moulage. La bague 30 est une bague ouverte clipsable qui forme la charnière de la patte de fixation pivotante 3.

La bague clipsable 30 comprend une ouverture 302 prévue pour le montage par clipsage de la bague dans la portion support de rotation 21. Lorsque la bague clipsable 30 est montée dans la portion support de rotation 21, elle est bloquée en translation par la mise en butée de ses bords circulaires 301h, 301b, avec les épaulements circulaires 210h, 210b, de la portion support de rotation 21. Le diamètre intérieur de la bague clipsable 30 sera dimensionné pour obtenir, avec l'élasticité des matériaux plastiques utilisés, un frottement prédéterminé entre la bague clipsable 30 et la portion support de rotation 21, de manière à garantir un auto-maintien en position par frottement de la position angulaire de la patte de fixation pivotante 3 par rapport à la portion support de rotation 21.

De part et d'autre de son ouverture 302, la bague clipsable 30 comporte des premier et deuxième portions rectilignes 300a, 300b, en regard. La première portion rectiligne 300a est un rebord d'arrêt de rotation. La deuxième portion rectiligne 300b est en continuité de matière avec l'équerre de fixation 31 qui se projette sensiblement tangentiellement à l'opposé du rebord d'arrêt de rotation 300a. Un orifice oblong 32, visible aux Figs.2 et 3, est aménagé dans l'équerre de fixation 31, pour le passage du goujon 122 et la fixation de la patte 3 contre la paroi 120 du passage de roue 12.

Dans d'autres formes de réalisation, la patte de fixation pivotante 3 sera montée sur la tubulure 20, non pas par clipsage, mais en glissant la bague 30 par une extrémité de la tubulure jusqu'à la position requise. Dans ces formes de réalisation, la bague pourra être fendue ou fermée.

On notera aussi que la portion formant support de rotation 21 pourra ne pas être une portion spécifique ayant un diamètre extérieur inférieur et des épaulements, mais simplement une portion rigide ou semi-rigide de la tubulure 20 ayant un moyen d'indexation pour le positionnement de la patte de fixation pivotante 3 sur la longueur de la tubulure 20. Dans ce cas, le blocage en translation de la patte de fixation pivotante 3 pourra être assuré au moyen d'une pièce de verrouillage analogue à la pièce de verrouillage 4 décrite ci-dessous.

Comme montré aux Figs.2 et 3, le montage de la patte de fixation pivotante 3 sur la tubulure 20 est sécurisé au moyen d'une pièce de verrouillage 4 qui prend ici la forme d'une équerre en L. La pièce de verrouillage 4, une fois soudée sur la tubulure 20, empêche tout désengagement de la bague clipsable 30 par rapport à la portion support de rotation 21. La pièce de verrouillage 4 comprend un premier bras 41 correspondant au bras long du L et un deuxième bras 42 correspondant au bras court du L. Le deuxième bras 42 de la pièce de verrouillage 4 est un support de fixation pour une fonction autre que celle de la fixation de la tubulure 20 dans le passage de roue 12 et ne sera pas décrit.

Le premier bras 41 est soudé sur la tubulure 20, de part et d'autre de la portion support de rotation 21, après la mise en place de la patte de fixation pivotante 3 dans la portion support de rotation 21. Une portion formant butée 40 du premier bras 41 recouvre la bague clipsable 30 sur toute sa hauteur. Un jeu radial est prévu entre la portion formant butée 40 et la bague clipsable 30 pour autoriser la rotation de la bague. La portion formant butée 40 assure un arrêt en rotation de la patte de fixation pivotante 3 et son immobilisation angulaire lors de la venue en contact contre elle du rebord d'arrêt de rotation 300a de la bague clipsable 30. La portion formant butée 40 et le rebord d'arrêt de rotation 300a forment ainsi un moyen d'immobilisation angulaire de ladite patte de fixation pivotante 3 par rapport à ladite tubulure de remplissage de carburant.

Comme montré à la Fig.5A, pendant l'opération de coiffage, la patte de fixation pivotante 3 est immobilisée angulairement dans une position escamotée dans laquelle le rebord d'arrêt de rotation 300a de la bague clipsable 30 est en contact contre la portion formant butée 40 de la pièce de verrouillage 4. Dans cette position escamotée, aucune interférence ne se produit pendant le coiffage entre la patte 3 et l'environnement du passage de roue 12, en particulier, le goujon de fixation 122.

Comme montré à la Fig.5B, en fin de coiffage, la patte de fixation pivotante 3 est mise dans une position rabattue contre la paroi 120, avec le goujon 122 dans l'orifice 32 de la patte 3 pour une fixation contre la paroi 120.

L'invention ne se limite pas aux formes de réalisation particulières qui ont été décrites ici à titre d'exemple. L'homme du métier, selon les applications de l'invention, pourra y apporter différentes modifications et variantes qui entrent dans la portée des revendications ci-annexées.

## Revendications

1. Tubulure de remplissage de carburant (20) comprenant un dispositif de fixation agencé de façon à autoriser une fixation de ladite tubulure (20) dans un passage de roue (12) d'un véhicule, ledit dispositif de fixation comprenant une patte de fixation pivotante (3), ladite patte de fixation pivotante (3) comprenant une bague formant charnière (30) qui est montée en rotation avec frottement sur une portion formant support de rotation (21) qui est comprise dans ladite tubulure (20), **caractérisée en ce que** ledit dispositif de fixation comprend également une pièce de verrouillage (4) qui est fixée sur ladite tubulure (20) et comprend des moyens agencés (40, 41) de façon à maintenir en place ladite bague formant charnière (30) sur ladite portion formant support de rotation (21), sans empêcher une rotation angulaire de ladite bague formant charnière (30) sur ladite portion formant support de rotation (21).

2. Tubulure selon la revendication 1, **caractérisée en ce que** ladite bague formant charnière (30) est une bague ouverte clipsée sur ladite portion formant support de rotation (21).

3. Tubulure selon la revendication 1 ou 2, **caractérisée en ce que** ladite bague formant charnière (30) comprend un rebord d'arrêt de rotation (300a) et ladite pièce de verrouillage (4) comprend une portion formant butée (40), ledit rebord d'arrêt de rotation (300a) et ladite portion formant butée (40) étant agencés de façon à assurer une immobilisation angulaire de ladite patte de fixation pivotante (3) dans une position escamotée de celle-ci.

4. Tubulure selon l'une quelconque des revendications 1 à 3, **caractérisée en ce que** ladite pièce de verrouillage (4) est soudée sur ladite tubulure (20).

5. Tubulure selon l'une quelconque des revendications 1 à 4, **caractérisée en ce que** ladite portion formant support de rotation (21) a un diamètre extérieur inférieur à celui de ladite tubulure (20) et est bornée en hauteur par deux épaulements circulaires en regard (210h, 210b) interdisant une translation de ladite bague formant charnière (30).

6. Tubulure selon l'une quelconque des revendications 1 à 5, **caractérisée en ce que** ledit dispositif de fixation est en plastique.

7. Passage de roue (12) dans une caisse de véhicule, **caractérisé en ce qu'**il comprend une tubulure de remplissage de carburant (20) selon l'une quelconque des revendications 1 à 6.

8. Véhicule **caractérisé en ce qu'**il comprend un passage de roue (12) selon la revendication 7.

## Patentansprüche

1. Kraftstoffeinfüllstutzen (20) mit einer Befestigungsvorrichtung, die angeordnet ist, um eine Befestigung des Rohrs (20) in einem Radkasten (12) eines Fahrzeugs zu ermöglichen, wobei die Befestigungsvorrichtung eine schwenkbare Befestigungsöse (3) umfasst, wobei die schwenkbare Befestigungshalterung (3) einen Scharnierring (30) aufweisend, der auf einem Abschnitt, der einen Drehträger (21) bildet, der in dem Rohr (20) enthalten ist, durch Reibung drehend montiert ist, **dadurch gekennzeichnet, dass** die Befestigungsvorrichtung auch ein Verriegelungsstück (4) umfasst, das an dem Rohr (20) befestigt ist und Mittel (40, 41) umfasst, um den Scharnierring (30) an dem Drehstützabschnitt (21) an Ort und Stelle zu halten, ohne eine Winkeldrehung des Scharnierrings (30) auf dem Drehstützabschnitt (21) zu verhindern.

2. Schlauch nach Anspruch 1, **dadurch gekennzeichnet, dass** der ein Scharnier (30) bildende Ring ein offener Ring ist, der auf den eine Drehhalterung (21) bildenden Abschnitt aufgeclipst ist.

3. Schlauch nach Anspruch 1 oder 2, **dadurch gekennzeichnet, dass** der Scharnierring (30) einen Drehstoppflansch (300a) umfasst und das Verschlussstück (4) einen Stopperabschnitt (40) umfasst, wobei der Flansch einen Drehstopper (300a) und wobei der Stopperabschnitt (40) so angeordnet ist, dass er eine Winkelarretierung des schwenkbaren Befestigungsansatzes (3) in einer zurückgezogenen Position davon gewährleistet.

4. Schlauch nach einem der Ansprüche 1 bis 3, **dadurch gekennzeichnet, dass** das Verschlussstück (4) mit dem Schlauch (20) verschweißt ist.

5. Schlauch nach einem der Ansprüche 1 bis 4, **dadurch gekennzeichnet, daß** der eine Drehstütze (21) bildende Abschnitt einen kleineren Außendurchmesser als der Schlauch (20) hat und in der Höhe durch zwei einander gegenüberliegende kreisförmige Schultern (210h, 210b) Verhindern einer Translation des ein Scharnier (30) bildenden Rings.

6. Schlauch nach einem der Ansprüche 1 bis 5, **dadurch gekennzeichnet, dass** die Befestigungsvorrichtung aus Kunststoff besteht.

7. Radlauf (12) in einer Fahrzeugkarosserie, **dadurch gekennzeichnet, dass** er ein Kraftstoffeinfüllrohr (20) nach einem der Ansprüche 1 bis 6 umfasst.

8. Fahrzeug, **dadurch gekennzeichnet, dass** es einen Radkasten (12) nach Anspruch 7 umfasst.

## Claims

1. Fuel filler neck (20) comprising a fastening device arranged so as to allow fastening of said tubing (20) in a wheel arch (12) of a vehicle, said fastening device comprising a pivoting fastening lug (3), said pivoting fixing bracket (3) comprising a hinge ring (30) which is mounted in rotation with friction on a portion forming a rotation support (21) which is included in said tubing (20), **characterized in that** said fixing device also comprises a locking piece (4) which is fixed to said tube (20) and comprises means arranged (40, 41) so as to hold said hinge ring (30) in place on said rotation support portion (21), without preventing angular rotation of said hinge ring (30) on said rotation support portion (21).

2. Tubing according to claim 1, **characterized in that** said ring forming a hinge (30) is an open ring clipped onto said portion forming a rotation support (21).

3. Tubing according to claim 1 or 2, **characterized in that** said hinge ring (30) comprises a rotation stop rim (300a) and said locking piece (4) comprises a stop portion (40), said rotation stop rim (300a) and said stop-forming portion (40) being arranged so as to ensure angular immobilization of said pivoting fixing lug (3) in a retracted position thereof.

4. Tubing according to any one of claims 1 to 3, **characterized in that** said locking piece (4) is welded to said tubing (20).

5. Tubing according to any one of claims 1 to 4, **characterized in that** said portion forming a rotation support (21) has an outside diameter smaller than that of said tubing (20) and is limited in height by two facing circular shoulders (210h, 210b) preventing a translation of said ring forming a hinge (30).

6. Tubing according to any one of claims 1 to 5, **characterized in that** said fixing device is made of plastic.

7. Wheel arch (12) in a vehicle body, **characterized in that** it comprises a fuel filler pipe (20) according to any one of claims 1 to 6.

8. Vehicle **characterized in that** it comprises a wheel arch (12) according to Claim 7.
